# EUROPEAN PATENT APPLICATION

(11) **EP 1 884 433 A1**
(43) Date of publication of application: **06.02.2008**
(21) Application number: 06425560.7
(22) Date of filing: 03.08.2006
(51) Int. Cl.: B61D 13/00, B61F 3/16, B61C 9/46, H02K 21/24

(54) **Gearless power bogie with independent wheels for a low floor tramway vehicle**

(71) Applicant: ANSALDOBREDA S.p.A., 80147 Napoli (IT)
(72) Inventor: Chiti, Fernando, 51039 Quarrata (IT); Gallone, Antonello, 84100 Salerno (IT); Gherardi, Federico, 51033 Pistoia (IT); Masucci, Antonio, 80011 Acerra (IT); Tarantino, Antonio, 80121 Napoli (IT)
(74) Representative: Franzolin, Luigi

(57) **Abstract**

A power bogie (1) for a tramway vehicle has a frame; a number of wheels (8) connected to the frame and rotating about respective axes (A); and at least one permanent-magnet, axial-flow electric motor (9) connected to one of the wheels (8).

## Description

The present invention relates to a power truck for a light tramway vehicle for city transport.

A light-duty tramway vehicle is used for city transport as an alternative to a heavy-duty subway, and should have relatively little environmental impact, reduces traffic problems in large cities, and can travel on road, a viaduct, and in a tunnel at lower running cost than a heavy-duty subway.

Recently marketed light-duty tramway vehicles, in which the whole floor is lowered on a level with the platform, have been particularly successful, by also allowing easy access to the vehicle by the disabled.

Other features preferably demanded of new-generation light-duty tramway vehicles are : short crosswise distance between the platform and vehicle; all the seats facing in the travelling direction; a cab with no electric cabinets, to improve visibility; lower weight per axis to increase carrying capacity for a given full-load weight; and fast deceleration for emergency braking.

Light-duty tramway vehicles are known featuring a power system comprising a motor and a mechanical speed reducer which powers the wheels of the same axis by means of a mechanical slip differential. More specifically, a mechanical slip differential comprises a slip joint designed so that, when the resistance encountered, as the vehicle moves forward, exceeds a given threshold, the corresponding wheel is disconnected.

The movement of the left wheels is therefore partly independent of that of the right wheels.

Other light-duty tramway vehicles with an independent-wheel power system have a motor for each wheel, an electronic differential, and a mechanical speed reducer interposed between the motor and the wheel.

More specifically, the electronic differential comprises a central control unit, which controls the two electric motors of the same axis to produce the same effect as a slip differential in response to signals from appropriately located sensors.

Known power trucks of the type described above limit the possibility of arranging the seats in the travelling direction, and the presence of the reducer increases the weight per axis.

It is an object of the present invention to provide a power truck designed to eliminate the aforementioned drawbacks.

According to the present invention, there is provided a power truck as claimed in Claim 1.

A preferred, non-limiting embodiment of the present invention will be described by way of example with reference to the accompanying drawings, in which:
Figure 1 shows a plan view of a detail of a power truck in accordance with the present invention;
Figure 2 shows a side view of Figure 1;
Figure 3 shows a partial section, with parts removed for clarity, along line III-III in Figure 2.

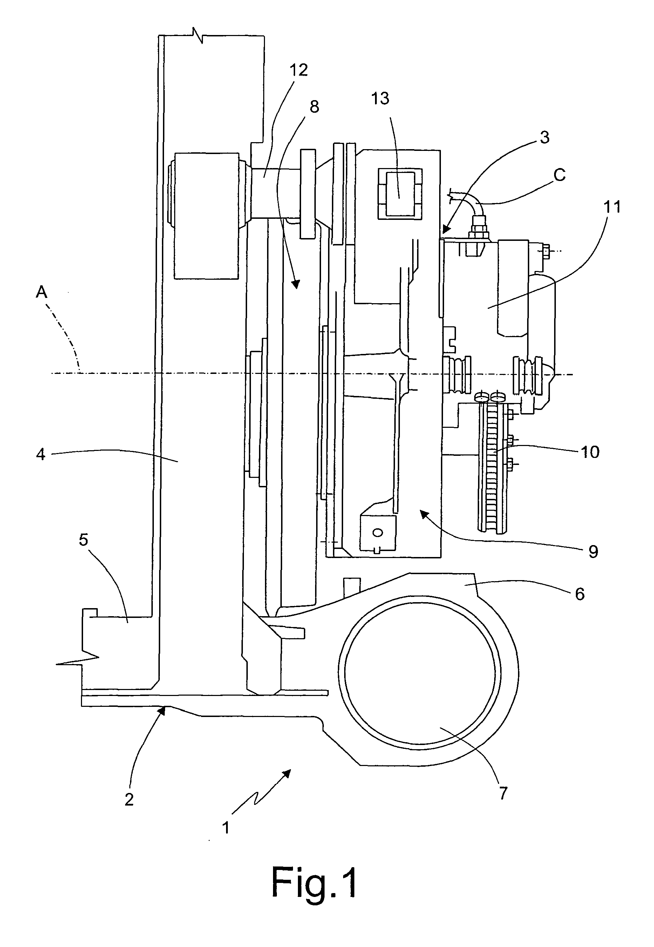

Number 1 in Figure 1 indicates a power truck (shown partly) comprising a frame 2, and a number of powered wheel assemblies 3 fitted to and projecting from frame 2.

More specifically, frame 2 comprises two longitudinal members 4, and two cross members 5 connected rigidly to longitudinal members 4. Each cross member 5 has respective end portions 6 projecting laterally with respect to longitudinal members 4 and each supporting an elastic member of a secondary suspension.

Truck 1 preferably comprises a pair of wheel assemblies 3 along a front axis A, and a pair of wheel assemblies 3 along a rear axis (not shown); and each pair of wheel assemblies 3 faces end portions 6 of a relative cross member 5, outwards of longitudinal members 4.

Each wheel assembly 3 comprises a wheel 8 which cooperates directly with a rail (not shown); an electric motor 9 fitted to and projecting from wheel 8; a self-ventilating brake disk 10 rotationally integral with wheel 8; and a brake caliper 11 fitted to electric motor 9 and operated by means of a hydraulic circuit C.

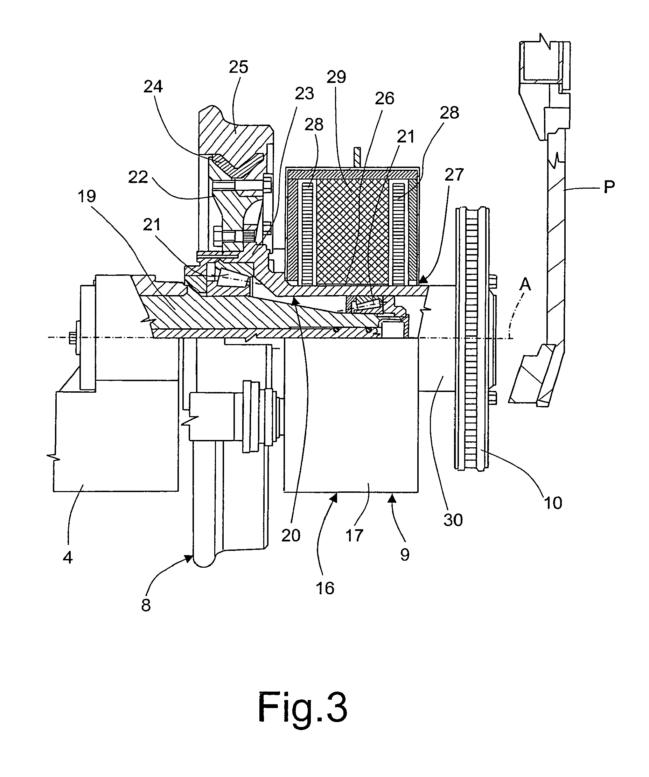

Electric motor 9 is preferably interposed between wheel 8 and brake disk 10; and electric motor 9 and brake disk 10 are so sized, along axis A, to clear the lateral wall P of the vehicle (Figure 3) sufficiently to allow for the movements of the vehicle as it is running.

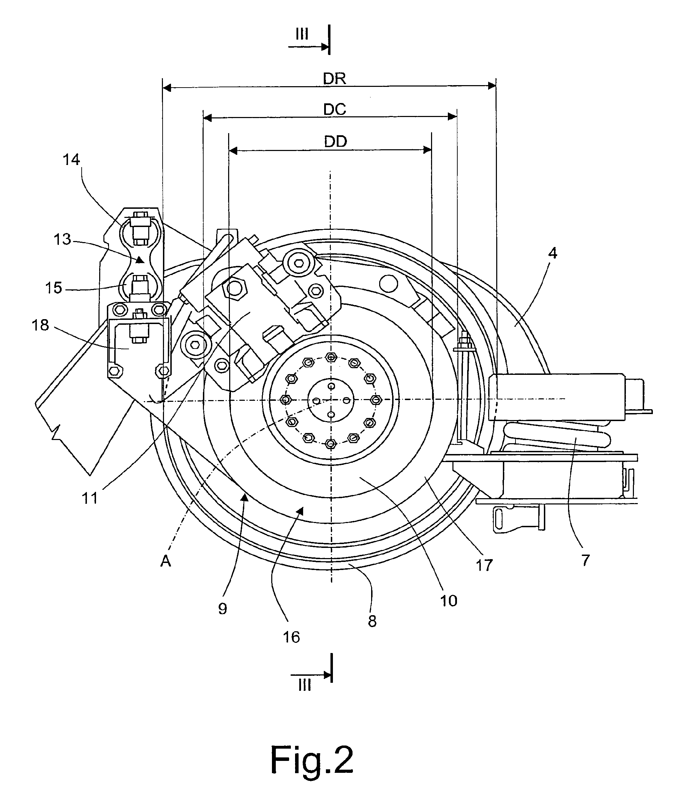

Electric motor 9 is connected in rocking manner, by means of a connecting rod 13 (Figure 2), to an arm 12 of frame 2 projecting from longitudinal member 4 on the same side as end portion 6.

More specifically, connecting rod 13 comprises an end portion 14 hinged to arm 12; and an end portion 15 vertically opposite end portion 14 and hinged to a frame 16 of electric motor 9.

Frame 16 comprises a cylindrical portion 17 coaxial with axis A; and a radial projection 18 hinged directly to end portion 15 of connecting rod 13.

Preferably, the maximum diameter DC of cylindrical portion 17 is greater than the maximum diameter DD of brake disk 10, and smaller than the diameter DR, or contact diameter, of wheel 8 measured at the surface contacting the rail.

Figure 3 shows a wheel assembly 3 as mounted with reference to a lateral wall P (shown partly) of the body of the light-duty tramway vehicle.

More specifically, wheel 8 is connected in freely rotating manner to a fixed tapered body 19 projecting from longitudinal member 4.

Wheel 8 preferably comprises a sleeve 20 fitted to tapered body 19 and supported by two conical bearings 21; a flange 22 connected rigidly to an end portion 23 of sleeve 20; a layer 24 of elastomeric material fitted to flange 22; and a ring 25 fitted to layer 24 and directly contacting a rail. In actual use, layer 24 dampens vibration produced by interaction of the wheel and rail, and reduces the noise level of the light-duty tramway vehicle.

Sleeve 20 comprises an integral supporting portion 26 inserted inside a through hole 27 in electric motor 9 and connected rigidly to two rotors 28 of electric motor 9.

More specifically, electric motor 9 is a permanent-magnet, axial-flow motor, and comprises permanent magnets fitted to rotors 28; and a stator 29 fixed with respect to tapered body 19 and having, in known manner, a number of windings (not shown) housed, axially symmetrical with respect to axis A, inside cylindrical portion 17 of frame 16.

Sleeve 20 also comprises an end portion 30 at the opposite longitudinal end of supporting portion 26 to end portion 23, and connected rigidly to brake disk 10 outside frame 16.

Wheel 8, rotors 28, and brake disk 10 are conveniently coaxial, and define a rigid body axially symmetrical with respect to axis A.

Power truck 1 has the following advantages.

Using a permanent-magnet, axial-flow electric motor 9 provides for achieving high electromechanical torques with no need for a mechanical speed reducer, thus enabling a reduction in weight per axis and bulk, so more space is available inside the vehicle body to arrange the seats in the travelling direction.

Moreover, using an electric motor 9 connected to each wheel reduces stress on the wheel-rail system when cornering.

The fact that electric motor 9 projects from wheel 8 enables the component parts to be so arranged as to further lower the vehicle body floor.

Connecting electric motor 9 directly to wheel 8, with no mechanical speed reducer, such as a gear or viscous reducer, in between, further reduces bulk and increases efficiency of the kinematic chain. Moreover, permanent-magnet, axial-flow electric motor 9 provides for a specific power of 2 kW/kg.

Brake disk 10 may also be simply connected to wheel 8 by rotors 28 of electric motor 9.

Electric motor 9 also shields layer 24 from the severe heat produced by frequent braking of a light-duty urban transport tramway vehicle.

Brake disk 10 faces outwards and is cooled better by the surrounding air.

Connection of frame 6 to frame 2 by connecting rod 13 permits small relative movements, thus reducing stress.

Clearly, changes may be made to power truck 1 as described and illustrated herein without, however, departing from the scope of the present invention as defined in the accompanying Claims.

For example, electric motor 9 may be cooled by a fluid system. A fluid cooling system, in fact, is more effective, and provides for a more compact, more silent-operating electric motor as compared with an air system.

## Claims

1. A power truck (1) for a tramway vehicle, the power truck comprising a frame (2), and a number of wheels (8) connected to said frame (2) to rotate about respective axes (A), and being **characterized by** comprising at least one permanent-magnet, axial-flow electric motor (9) connected to at least one of said wheels (8).

2. A power truck as claimed in Claim 1, **characterized in that** said at least one electric motor (9) is connected to and projects from said at least one wheel (8).

3. A power truck as claimed in Claim 2, **characterized in that** said at least one electric motor (9) comprises at least one rotor (28) rotationally integral with said at least one wheel (8).

4. A power truck as claimed in any one of the foregoing Claims, **characterized in that** said at least one electric motor (9) is connected to said at least one wheel (8) with no speed reducer in between.

5. A power truck as claimed in any one of the foregoing Claims, **characterized in that** said at least one wheel (8) comprises noise damping means (24) made of elastomeric material.

6. A power truck as claimed in any one of the foregoing Claims, **characterized by** comprising at least one brake disk (10) connected rotationally rigidly to a rotor (28) of said at least one electric motor (9).

7. A power truck as claimed in Claim 6, **characterized by** comprising at least one caliper (11) cooperating with said at least one brake disk (10) and integral with said at least one electric motor (9).

8. A power truck as claimed in Claim 6 or 7, **characterized in that** said at least one electric motor (9) is interposed between said at least one wheel (8) and said at least one brake disk (10) along said axis (A).

9. A power truck as claimed in any one of the foregoing Claims, **characterized in that** said at least one electric motor (9) comprises a stator (29), and a motor frame (16) having a portion (17) housing said stator (29); and **in that** said portion (17) has a maximum dimension (DC) smaller than a contact diameter (DR) of said at least one wheel (8).

10. A power truck as claimed in Claim 9, **characterized in that** said motor frame (16) is connected in rocking manner to said frame (2).

11. A power truck as claimed in Claim 10, **characterized in that** said motor frame (16) is connected to said frame (2) by a connecting rod (13).

## Amended claims

### Amended claims in accordance with Rule 137(2) EPC.

**1.** A power bogie (1) for a railway vehicle, the power bogle comprising a frame (2), and a number of wheels (8) connected to said frame (2) to rotate about respective axes (A), and being **characterized by** comprising at least one permanent-magnet, axial-flow electric motor (9) connected to at least one of said wheels (8).

**2.** A power bogle as claimed in Claim 1, **characterized in that** said at least one electric motor (9) is connected to and projects from said at least one wheel (8).

**3.** A power bogle as claimed in Claim 2, **characterized in that** said at least one electric motor (9) comprises at least one rotor (28) rotationally integral with said at least one wheel (8).

**4.** A power bogle as claimed in any one of the foregoing Claims, **characterized in that** said at least one electric motor (9) is connected to said at least one wheel (8) with no speed reducer in between.

**5.** A power bogle as claimed in any one of the foregoing Claims, **characterized in that** said at least one wheel (8) comprises noise damping means (24) made of elastomeric material.

**6.** A power bogle as claimed in any one of the foregoing Claims, **characterized by** comprising at least one brake disk (10) connected rotationally rigidly to a rotor (28) of said at least one electric motor (9).

**7.** A power bogle as claimed in Claim 6, **characterized by** comprising at least one caliper (11) cooperating with said at least one brake disk (10) and integral with said at least one electric motor (9).

**8.** A power bogle as claimed in Claim 6 or 7, **characterized in that** said at least one electric motor (9) is interposed between said at least one wheel (8) and said at least one brake disk (10) along said axis (A).

**9.** A power bogle as claimed in any one of the foregoing Claims, **characterized in that** said at least one electric motor (9) comprises a stator (29), and a motor frame (16) having a portion (17) housing said stator (29); and **in that** said portion (17) has a maximum dimension (DC) smaller than a contact diameter (DR) of said at least one wheel (8).

**10.** A power bogle as claimed in Claim 9, **characterized in that** said motor frame (16) is connected in rocking manner to said frame (2).

**11.** A power bogle as claimed in Claim 10, **characterized in that** said motor frame (16) is connected to said frame (2) by a connecting rod (13).
